# EUROPÄISCHE PATENTSCHRIFT

(11) **EP 1 637 779 B1**
(45) Veröffentlichungstag und Bekanntmachung des Hinweises auf die Patenterteilung: **30.07.2008**
(21) Anmeldenummer: 05020044.3
(22) Anmeldetag: 15.09.2005
(51) Int. Cl.: F16H 63/32, F16H 63/42

(54) **Schaltgabel für ein automatisch schaltendes Getriebe**
Shift fork for an automatic transmission
Fourchette de changement de vitesses pour une transmission automatique

(30) Priorität: 20.09.2004 DE 202004014747 U
(43) Veröffentlichungstag der Anmeldung: 22.03.2006
(73) Patentinhaber: FSG Automotive AG, 09376 Oelsnitz (DE)
(72) Erfinder: Kirschdorf, Dieter, 46282 Dorsten (DE)
(74) Vertreter: Linnemann, Winfried

(56) Entgegenhaltungen:
- EP-A- 0 715 098
- EP-A- 1 486 285
- EP-A- 1 507 100
- DE-A1- 10 337 646
- US-A1- 2005 092 115
- PATENT ABSTRACTS OF JAPAN Bd. 015, Nr. 432 (M-1175), 5. November 1991 (1991-11-05) & JP 03 181657 A (NISSAN MOTOR CO LTD), 7. August 1991 (1991-08-07)

## Beschreibung

Die Erfindung betrifft eine Schaltgabel für ein automatisch schaltendes Getriebe mit einer Schaltgabelpositionserkennunggeinrichtung, insbesondere für ein Kraftfahrzeuggetriebe.

Eine solche Schaltgabel ist aus der EP-A-0 715 098 bekannt, bei der an einem Getriebegehäuse ein mit einem Schalter versehener Positionssensor befestigt ist, der in direkten Kontakt mit dem Schaltgabelfuß tritt, um die Neutralstellung der Schaltgabel zu erfassen. Die EP-A-0 715 098 wird als nächstliegender Stand der Technik gegenüber dem Gegenstand des Anspruchs 1 betrachtet.

Die Europäische Patentanmeldung EP 1 507 100 A2 wird gemäß Artikel 54 (3) EPÜ genannt.

Für die vorliegende Erfindung stellt sich die Aufgabe, eine konkrete, die gestellten hohen Genauigkeitaanforderungen erfüllende und zugleich wirtschaftliche Lösung für die berührungslose Erfassung der Schaltgabelposition.

Diese Aufgabe wird durch den Gegenstand des Anspruchs 1 gelöst. Im zusammengebauten Zustand ist erfindungsgemäß der Innenraum der Kappe verschlossen, wodurch der darin untergebrachte Magnetkörper gegen äußere Einwirkungen gut geschützt ist. Damit dient die Kappe nicht nur der Halterung und Positionierung des Magnetkörpers, sondern sorgt zusätzlich auch für dessen Schutz im Betrieb der Schaltgabel innerhalb eines Schaltgetriebes.

Mit der Erfindung wird einerseits eine hinsichtlich der Positionierung sehr genaue und andererseits hinsichtlich ihrer Herstellung sehr einfache und dadurch wirtschaftliche Anbringung des wenigstens einen Magnetkörpere an dem Magnetträger mit Hilfe der Kappe erreicht. Dadurch, daß der Magnetkörper kraft- und/oder formschlüssig in der Kappe angeordnet ist, ist der Einsatz von Klebstoffen oder sonstigen Verbindungshilfsmitteln nicht erforderlich. Im Rahmen der Montage muß der Magnetkörper nur in den Innenraum der Kappe eingeführt werden, wonach der Magnetkörper dann sofort seine positionsgenaue und fixierte Lage relativ zur Kappe einnimmt. Die mit dem wenigstens einem Magnetkörper bestückte Kappe ist dann mittels einer ebenfalls kraft- und/oder formschlüssigen Verbindung an dem Magnetträger angebracht, so daß auch hier keine Klebstoffe oder sonstigen Verbindungshilfsmittel, wie Schrauben oder dergleichen, benötigt werden. Hierdurch wird eine schnelle und dadurch wirtschaftliche Herstellung der Schaltgabel gefördert. Gleichzeitig ist gewährleistet, daß der wenigstens eine Magnetkörper relativ zu dem Magnetträger die vorgesehene Position exakt einnimmt und später dauerhaft beibehält. Die Produktion von Ausschuß, beispielsweise infolge eines nicht lagegenauen Anklebens eines Magnetkörpers, wird hier praktisch vollständig ausgeschlossen. Auch alle Wartezeiten in Verbindung mit einer für einen Kleber notwendigen Aushärtezeit fallen hier vollständig weg.

Damit ist gewährleistet, dass der Magnetkörper seine Funktion über die gesamte Lebensdauer der Schaltgabel und des zugehörigen Getriebes zuverlässig erfüllen kann.

Um die Anbringung der Kappe an dem Magnetträger möglichst schnell und einfach und vorzugsweise auch automatisch ausführen zu können, wird weiter vorgeschlagen, daß die den Magnetkörper enthaltende Kappe mit dem Magnetträger verrastet ist. Zur Herstellung dieser Rastverbindung genügt ein einfaches Andrücken oder Aufdrücken der den wenigstens einen Magnetkörper enthaltenden Kappe an oder auf den Magnetträger in einer einzigen Bewegungsrichtung.

Um den wenigstens einen Magnetkörper in einer für die Schaltgabelpositionserkennungseinrichtung günstigen Lage im Bereich der Schaltgabel positionieren zu können, schlägt die Erfindung weiter vor, daß die Kappe mit dem darin angeordneten Magnetkörper an einem eigenen, als Magnetträger dienenden Schaltgabeleinzelteil befestigt ist. Das separate Schaltgabeleinzelteil, das als Magnetträger dient, kann unabhängig von der technisch vorgegebenen Formgebung der übrigen Schaltgabel so geformt sein und einen solchen Verlauf aufweisen, daß der wenigstens eine Magnetkörper die gewünschte und für die Funktion der Schaltgabelpositionserkennungseinrichtung optimale Lage erhält.

Eine diesbezügliche Weiterbildung schlägt vor, daß das als Magnetträger dienende Schaltgabeleinzelteil ein mit der übrigen Schaltgabel starr verbundener Ausleger ist, der an seinem freien Ende eine Platte trägt, deren äußerer Umriß an den inneren Umriß der offenen Seite der Kappe angepaßt ist. Die am freien Ende des Auslegers vorgesehene Platte erlaubt aufgrund ihrer Anpassung an die offene Seite der Kappe eine besonders gute Verbindung dieser beiden genannten Teile miteinander, was der Dauerhaltbarkeit der Verbindung und dem Schutz des in der kappe angeordneten wenigstens einen Magnetkörpers zugute kommt.

In weiterer Ausgestaltung ist dabei bevorzugt vorgesehen, daß die Platte zumindest über einen Teil ihres den äußeren Umriß bildenden Umfangs eine nach außen weisende Rastnut aufweist, in die eine innenseitig vorragende Rastfeder der Kappe eingreift. Mit dieser Ausgestaltung wird eine besonders sichere und im Betrieb der Schaltgabel in einem Getriebe dauerhaft haltbare Verbindung zwischen der Kappe und der übrigen Schaltgabel gewährleistet, die insbesondere allen auftretenden mechanischen Belastungen durch die häufigen Bewegungen mit starken Beschleunigungen und Abbremsungen der Schaltgabel standhält.

Weiterhin ist bevorzugt vorgesehen, daß die Kappe eine länglich quaderartige Grundform hat und daß im Innenraum der Kappe mit Abstand voneinander zwei Aufnahmebereiche zur Aufnahme je eines Magnetkörpers ausgebildet sind. Durch die Verwendung von zwei voneinander beabstandeten Magnetkörpern wird eine besonders hohe Funktionssicherheit der Schaltgabelpositionserkennungseinrichtung erreicht, was für eine sichere automatische Schaltfunktion des Getriebes vorteilhaft ist.

Um die Kappe einerseits möglichst leicht und andererseits möglichst stabil zu machen und dabei gleichzeitig eine sichere Halterung und Positionierung des wenigstens einen in der Kappe angeordneten Magnetkörpers sicherzustellen, ist bevorzugt vorgesehen, daß die Kappe ein einstückiges Spritzgußteil aus Kunststoff mit inneren Positionier- und Halterippen für den oder die Magnetkörper und mit inneren Aussteifungsrippen ist. Die Positionier- und Halterippen bieten den form- und/oder kraftschlüssigen Halt für den wenigstens einen Magnetkörper. Gleichzeitig sorgen diese Positionier- und Halterippen zusammen mit den Aussteifungsrippen für eine hohe Formstabilität der Kappe bei geringem Gewicht und geringen Wandstärken. Hierdurch bleibt das Gewicht der Kappe sehr gering, so daß sie das Gesamtgewicht der Schaltgabel praktisch nicht erhöht.

Zwecks möglichst einfacher Massenherstellung der Kappe ist der Kunststoff, aus dem die Kappe besteht, vorzugsweise ein Thermoplast. Hiermit kann die Kappe problemlos als Spritzgußteil gefertigt werden, das keiner Nachbearbeitung mehr bedarf.

Damit die Kappe die ihr zugedachte Funktion im Betrieb der Schaltgabel in einem Getriebe dauerhaft und zuverlässig erfüllen kann, ist schließlich noch vorgesehen, daß der Kunststoff, aus dem die Kappe besteht, ein gegen physikalische und chemische Einwirkungen im Getriebe in einem Temperaturbereich von -40°C bis +150°C beständiger Kunststoff ist.

Ein Ausführungsbeispiel der Erfindung wird im Folgenden anhand einer Zeichnung erläutert. Die Figuren der Zeichnung zeigen:
- Figur 1: eine Schaltgabel mit zwei Magnetkörpern für eine Schaltgabelpositionserkennungseinrichtung, in perspektivischer Ansicht,
- Figur 2: eine Kappe zur Aufnahme und Halterung der zwei Magnetkörper in Ansicht schräg von unten,
- Figur 3: die Kappe zur Aufnahme und Halterung der zwei Magnetkörper im Längsschnitt,
- Figur 4: den linken Endbereich der Kappe aus Figur 3 in vergrößerter Darstellung,
- Figur 5: die Kappe aus Figur 3 im Querschnitt gemäß der Linie V-V in Figur 3 und
- Figur 6: die Kappe aus Figur 2 und 3 in Ansicht von unten.

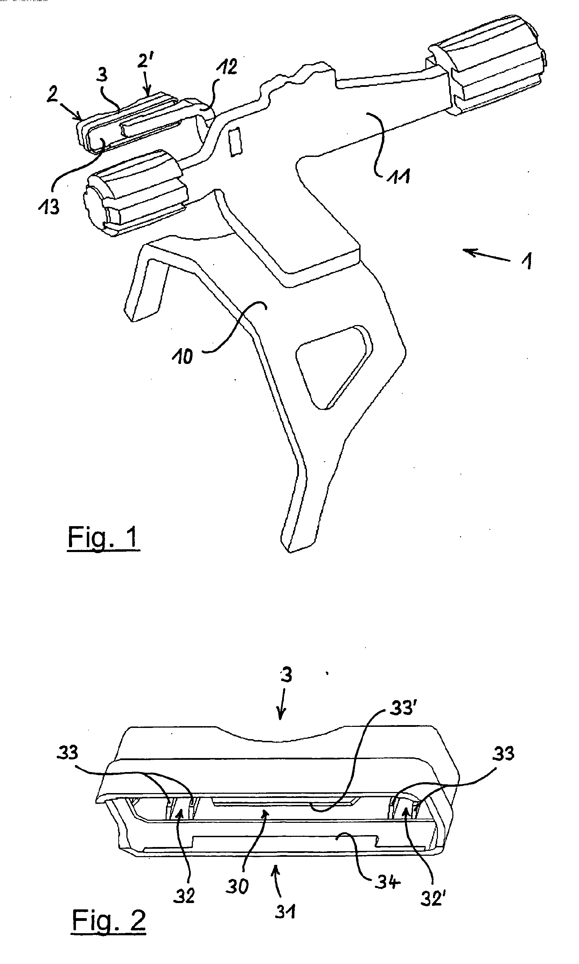

Wie die Figur 1 der Zeichnung zeigt, besteht das hier dargestellte Ausführungsbeispiel einer Schaltgabel 1 aus einem Gabelteil 10, einem Schienen- oder Führungsteil 11 und einem Magnetträger 12. Der Gabelteil 10, der Schienen- oder Führungsteil 11 und der Magnetträger 12 sind hier aus Stahlblech bestehende Feinschneidteile, die fest miteinander verbunden, vorzugsweise verschweißt, sind.

Am freien Ende des Magnetträgers 12 ist mit diesem eine ebenfalls metallische, in ihrer Grundform länglichrechteckige Platte 13 fest verbunden. Mit der Platte 13 ist eine Kappe 3 verbunden, hier durch eine Rastverbindung. In der Kappe 3 liegen mit axialem Abstand voneinander zwei Magnetkörper 2 und 2', die Teil einer elektronischen Schaltgabelpositionserkennungseinrichtung sind.

Die Kappe 3 besteht aus einem nichtmagnetischen Material, vorzugsweise aus einem thermoplastischen Kunststoff, der gegen die in einem Getriebe auftretenden physikalischen und chemischen Belastungen ausreichend resistent ist. Insbesondere ist die Kappe 3 beständig gegen Getriebeöl und über einen ausreichen großen Temperaturbereich, in der Praxis zwischen etwa -40° Celsius und +150° Celsius, temperaturbeständig.

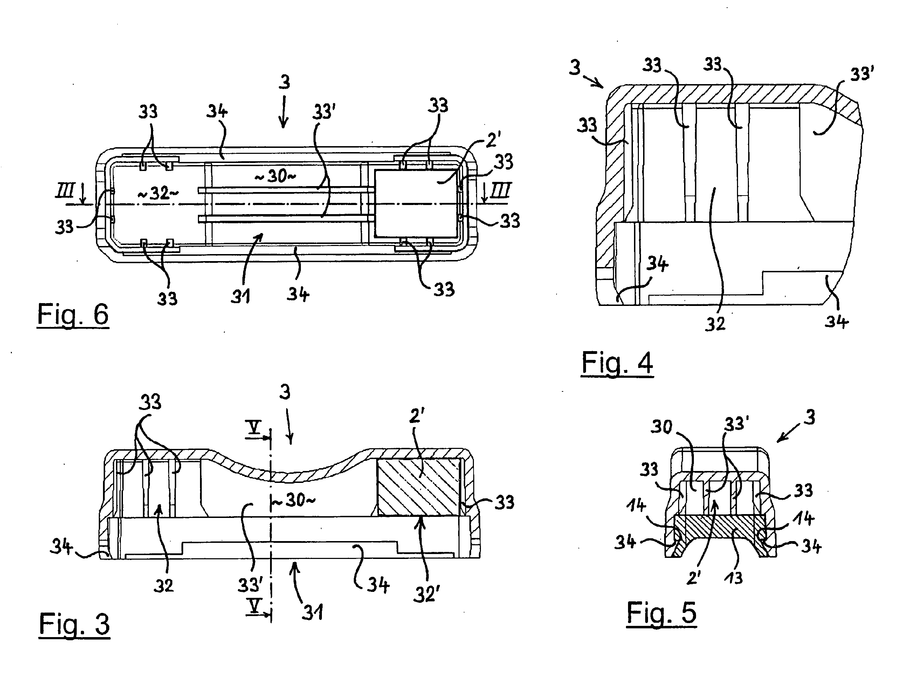

Die Figuren 2 und 3 zeigen die Kappe 3 aus Figur 1 in einer vergrößerten Ansicht schräg von unten und in einem vergrößerten Längsschnitt. Nach oben sowie zu ihren vier Seiten hin ist die Kappe 3 geschlossen. Nach unten hin weist sie eine zunächst offene Unterseite 31 auf. Der Innenraum 30 der Kappe 3 besitzt hier ganz links und ganz rechts je einen Aufnahmebereich 32 bzw. 32' für die Aufnahme je eines Magnetkörpers. In Figur 2 befindet sich noch kein Magnetkörper 2, 2' in der Kappe 3. In Figur 3 ist der linke Aufnahmebereich 32 noch nicht bestückt, während in dem rechten Aufnahmebereich 32' bereits der zugehörige Magnetkörper 2' angeordnet ist.

In jedem Aufnahmebereich 32, 32' sind an der Innenseite der Kappe 3 mit dieser einstückige Positionier- und Halterippen 33 angeformt. Diese sind hinsichtlich ihrer Anordnung und Abmessung so gestaltet, daß ein Magnetkörper 2, 2' von der offenen Unterseite 31 her in den zugehörigen Aufnahmebereich 32, 32' eingepreßt werden kann und dann durch Kraft- und/oder Formschluß ausreichend sicher und lagegenau innerhalb der Kappe 3 gehalten ist.

Zur Aussteifung der Kappe 3 sind außerdem in dem Bereich des Innenraums 30 zwischen den beiden Aufnahmebereich 32, 32' zusätzliche Versteifungsrippen 33' angeordnet, die in Längsrichtung der Kappe 3 parallel zueinander verlaufen und ebenfalls einstückig mit der übrigen Kappe 3 ausgebildet sind. Die Kappe 3 ist damit als einstückiges Spritzgußteil kostengünstig in Massenfertigung herstellbar.

An ihrem in den Figuren 2 und 3 unteren, die offene Seite 31 begrenzenden Rand besitzt die Kappe 3 über zumindest einen Teil ihres Innenumfanges nach innen weisende Rastfedern 34, die zur rastenden Verbindung der Kappe 3 mit der in Figur 1 gezeigten Platte 13 mittels an dieser vorgesehener Rastnuten dienen.

Die Figur 4 mit dem vergrößerten Detail aus Figur 3 verdeutlicht die Anordnung und den Verlauf der Positionier-und Halterippen 33 und des an den Aufnahmebereich 32 für den einen Magnetkörper 2 angrenzenden Endbereichs der Versteifungsrippe 33'. Ganz unten in Figur 3 sind noch Teile der Rastfeder 34 erkennbar.

Figur 5 zeigt die Kappe 3 aus Figur 2 und Figur 3 im Querschnitt gemäß der Schnittlinie V-V in Figur 3, nun zusammen mit der Platte 13. Wie die Figur 5 deutlich zeigt, greifen im montierten Zustand die Rastfedern 34 der Kappe 3 in passende Rastnuten 14 am Außenumfang der Platte 13 ein. Gleichzeitig liegen die Versteifungsrippen 33' mit ihrer Unterkante auf der Oberseite der Platte 13 auf. Im Hintergrund liegt der Magnetkörper 2' in seinem Aufnahmebereich 32'. Vor der Schnittebene liegt nun der Magnetkörper 2 in seinem Aufnahmebereich 32.

Auf diese Weise wird die Kappe 3 fest und sicher und gleichzeitig lagegenau mit der Platte 13 und damit mit der übrigen Schaltgabel 1 rastend verbunden. Dabei wird gleichzeitig für eine feste und sichere und lagegenaue Halterung der Magnetkörper 2, 2' relativ zur Platte 13 und relativ zur übrigen Schaltgabel 1 gesorgt.

Figur 6 der Zeichnung zeigt die Kappe 3 aus Figur 2 und Figur 3 in Ansicht auf die offene Unterseite 31. Links und rechts liegen im Innenraum 30 der Kappe 3 die Aufnahmebereiche 32 und 32' für die Aufnahme der Magnetkörper 2 und 2'. Auch in Figur 6 ist der linke Aufnahmebereich 32 noch nicht mit dem zugehörigen Magnetkörper 2 bestückt, während in dem rechten Aufnahmebereich 32' der Magnetkörper 2' bereits angeordnet ist. Hier wird anschaulich deutlich, daß der rechte Magnetkörper 2' an seinen in Figur 5 nach oben, nach rechts und nach unten weisenden Seiten durch je zwei Positionier- und.Halterippen 33 in einer definierten Lage gehalten ist. An seiner in Figur 5 nach links weisenden Seite liegt der Magnetkörper 2' an den nach rechts weisenden Stirnkanten der Versteifungsrippen 33' an. Die in Figur 6 nach hinten weisende Oberseite des Magnetkörpers 2' liegt an der Innenseite des oberen Teils der Kappe 3 an.

Die in Figur 5 dem Betrachter zugewandte Unterseite des Magnetkörpers 2' liegt im montierten Zustand der Kappe 3 auf der der Kappe 3 zugewandten Oberseite der Platte 13 auf.

Das gleiche gilt für den Magnetkörper 2 nach dessen Einsetzen in die Kappe 3 und nach Aufsetzen der Kappe 3 auf die Platte 13. Damit haben die Magnetkörper 2, 2' innerhalb der Kappe 3 und relativ zur Platte 13 und damit relativ zur übrigen Schaltgabel 1 keinerlei Bewegungsfreiheit, so daß eine für die gewünschte Funktion benötigte exakte Positionierung dauerhaft gewährleistet ist.

Oben und unten in Figur 6 sind schließlich noch die Rastfedern 34 der Kappe 3 erkennbar, die zum Innenraum 30 der Kappe 3 weisen. Die Rastfedern 34 sind, wie die Figur 5 veranschaulicht, so abgeschrägt, daß ein Aufdrücken der Kappe 3 mit den darin befindlichen Magnetkörpern 2, 2' auf die Platte 13 senkrecht zur Flächenebene der Platte 13 für die Herstellung der gewünschten Verbindung genügt. Sowohl das Einsetzen der Magnetkörper 2, 2' als auch das Aufrasten der mit den Magnetkörpern 2, 2' bestückten Kappe 3 auf die Platte 13 kann mit relativ geringem Aufwand automatisiert werden, was zu einer kostengünstigen Fertigung der Schaltgabel 1 beiträgt.

**Bezugszeichenliste:**

| Zeichen | Bezeichnung |
|---|---|
| 1 | Schaltgabel insgesamt. |
| 10 | Gabelteil von 1 |
| 11 | Schienenteil von 1 |
| 12 | Magnetträger |
| 13 | Platte |
| 14 | Rastnut an 13 |
| 2, 2' | Magnetkörper |
| 3 | Kappe |
| 30 | Innenraum |
| 31 | offene Seite |
| 32, 32' | Aufnahmebereiche für 2, 2' |
| 33, 33' | Positionierrippen, Versteifungsrippen in 3 |
| 34 | Rastfeder an 3 |

## Patentansprüche

1. Schaltgabel (1) für ein automatisch schaltendes Getriebe mit einer Schaltgabelpositionserkennungseinrichtung, insbesondere für ein Kraftfahrzeuggetriebe, wobei die Schaltgabel (1) einen Magnetträger (12) umfasst und wobei wenigstens ein Magnetkörper (2, 2') mittels einer Kappe (3) aus unmagnetischem Material auf dem Magnetträger (12) positioniert und befestigt ist, wobei die Kappe (3) einen Innenraum (30) aufweist, in dem der wenigstens eine Magnetkörper (2, 2') kraft- und/oder formschlüssig und relativ zur Kappe (3) lagegenau aufgenommen ist, wobei die Kappe (3) über an ihr und/oder am Magnetträger (12) vorgesehene Verbindungselemente (34, 14) kraft- und/oder formschlüssig und lagegenau mit dem Magnetträger (12) verbunden ist, und wobei die Kappe (3) eine offene Seite (31) aufweist, die
im mit dem Magnetträger (12) verbundenen Zustand der Kappe (3) durch den Magnetträger (12) verschlossen ist.

2. Schaltgabel nach Anspruch 1, wobei die offene Seite (31) der Kappe eine Unterseite (31) ist durch die hindurch der wenigstens eine Magnetkörper (2, 2') in den Innenraum (30) der Kappe (3) eingebracht ist.

3. Schaltgabel nach Anspruch 1 oder 2, wobei die den Magnetkörper (2, 2') enthaltende Kappe (3) mit dem Magnetträger (12) verrastet ist.

4. Schaltgabel nach einem der vorhergehenden Ansprüche, wobei die Kappe (3) mit dem darin angeordneten Magnetkörper (2, 2') an einem eigenen, als Magnetträger (12) dienenden Schaltgabeleinzelteil befestigt ist.

5. Schaltgabel nach Anspruch 4, wobei das als Magnetträger (12) dienende Schaltgabeleinzelteil ein mit der übrigen Schaltgabel (1) starr verbundener Ausleger ist, der an seinem freien Ende eine Platte (13) trägt, deren äußerer Umriß an den inneren Umriß der offenen Seite (31) der Kappe (3) angspaßt ist.

6. Schaltgabel nach Anspruch 5, wobei die Platte (13) zumindest über einen Teil ihres den äußeren Umriß bildenden Umfangs eine nach außen weisende Rastnut (14) aufweist, in die eine innenseitig vorragende Rastfeder (34) der Kappe (3) eingreift.

7. Schaltgabel nach einem der vorhergehenden Ansprüche, wobei die Kappe (3) eine länglich quaderartige Grundform hat und daß im Innenraum (30) der Kappe (3) mit Abstand voneinander zwei Aufnahmebereiche (32, 32') zur Aufnahme je eines Magnetkörpers (2 und 2') ausgebildet sind.

8. Schaltgabel nach einem der vorhergehenden Ansprüche, wobei die Kappe (3) ein einstückiges Spritzgußteil aus Kunststoff mit inneren Positionier- und Halterippen (33) für den oder die Magnetkörper (2, 2') und mit inneren Aussteifungsrippen (33') ist.

9. Schaltgabel nach Anspruch 8, wobei der Kunststoff, aus dem die Kappe (3) besteht, ein Thermoplast ist.

10. Schaltgabel nach Anspruch 8 oder 9, wobei der Kunststoff, aus dem die Kappe (3) besteht, ein gegen physikalische und chemische Einwirkungen im Getriebe in einem Temperaturbereich von -40°C bis +150°C beständiger Kunststoff ist.

## Claims

1. A selector fork (1) for an automatically shifting transmission comprising a selector fork position detection device, in particular for a motor vehicle transmission, wherein the selector fork (1) comprises a magnetic support (12) and wherein at least one magnetic body (2, 2') is positioned and fastened on the magnetic support (12) by means of a cap (3) made of non-magnetic material, wherein the cap (3) encompasses an interior (30) in which the at least one magnetic body (2, 2') is accommodated so as to be precisely positioned in a non-positive and/or positive manner and relative to the cap (3), wherein the cap (3) is connected to the magnetic support (12) so as to be precisely positioned in a non-positive and/or positive manner via connecting elements (34, 14) connected to said cap (3) and/or to the magnetic support (12) and wherein the cap (3) encompasses an open side (31), which is closed by means of the magnetic support (12) when the cap (3) is connected to the magnetic support (12).

2. The selector fork according to claim 1, wherein the open side (31) of the cap is an underside (31), through which the at least one magnetic body (2, 2') is introduced into the interior (30) of the cap (3).

3. The selector fork according to claim 1 or 2, wherein the cap (3) including the magnetic body (2, 2') is locked with the magnetic support (12).

4. The selector fork according to any one of the preceding claims, wherein the cap (3) comprising the magnetic body (2, 2') arranged therein is fastened to its own selector fork component part, which serves as a magnetic support (12).

5. The selector fork according to claim 4, wherein the selector fork component part, which serves as a magnetic support (12) is an extension, which is rigidly connected to the remaining selector fork (1) and which, at its free end, supports a disk (13), the outer contour of which is adapted to the inner contour of the open side (31) of the cap (3).

6. The selector fork according to claim 5, wherein the disk (13), across at least a part of its periphery forming the outer contour, encompasses a catch groove (14), which is oriented outwards, which engages with a catch spring (34) of the cap (3), which protrudes on the inside.

7. The selector fork according to any one of the preceding claims, wherein the cap (3) has an elongate square basic shape and that two accommodating regions (32, 32') for accommodating a magnetic body (2 and 2') in each case are embodied in the interior (30) of the cap (3) at a distance from one another.

8. The selector fork according to any one of the preceding claims, wherein the cap (3) is a one-piece injection molding part made of plastic comprising inner positioning and supporting ribs (33) for the magnetic body or the magnetic bodies (2, 2') and comprising inner reinforcement ribs (33').

9. The selector fork according to claim 8, wherein the plastic of which the cap (3) is comprised of is a thermoplast.

10. The selector fork according to claim 8 or 9, wherein the plastic of which the cap (3) is comprised of is a plastic, which is resistant to physical and chemical exposures in the transmission in a temperature range from -40°C to +150°C.

## Revendications

1. Fourchette de changement de vitesses (1) pour une transmission automatique avec un dispositif de reconnaissance de la position de la fourchette de changement de vitesses, en particulier pour une transmission de véhicule automobile, la fourchette de changement de vitesses (1) comprenant un support magnétique (12) et au moins un corps magnétique (2, 2') étant positionné et fixé sur le support magnétique (12) au moyen d'une calotte (3) en matière non magnétique, la calotte (3) présentant un espace intérieur (30) dans lequel l'au moins un corps magnétique (2, 2') est logé par adhérence et/ou par complémentarité de forme et dans une position exacte relativement à la calotte (3), la calotte (3) étant reliée au support magnétique (12) par adhérence et/ou par complémentarité de forme et dans une position exacte par l'intermédiaire d'éléments de liaison (34, 14) prévus sur elle et/ou sur le support magnétique (12) et la calotte (3) comportant un côté ouvert (31) qui, lorsque la calotte (3) est reliée au support magnétique (12), est fermé par le support magnétique (12).

2. Fourchette de changement de vitesses selon la revendication 1, le côté ouvert (31) de la calotte étant une face inférieure (31) à travers laquelle l'au moins un corps magnétique (2, 2') est introduit dans l'espace intérieur (30) de la calotte (3).

3. Fourchette de changement de vitesses selon la revendication 1 ou 2, la calotte (3) contenant le corps magnétique (2, 2') étant encliquetée avec le support magnétique (12).

4. Fourchette de changement de vitesses selon l'une des revendications précédentes, la calotte (3) avec le corps magnétique (2, 2') situé dedans étant fixée à une propre pièce constitutive de la fourchette de changement de vitesses servant de support magnétique (12).

5. Fourchette de changement de vitesses selon la revendication 4, la pièce constitutive de la fourchette de changement de vitesses servant de support magnétique (12) étant une pièce en porte à faux solidaire du reste de la fourchette de changement de vitesses (1) qui, en son extrémité libre, porte une plaque (13) dont le contour extérieur est adapté au contour intérieur du côté ouvert (31) de la calotte (3).

6. Fourchette de changement de vitesses selon la revendication 5, la plaque (13) présentant, au moins sur une partie de son pourtour constituant le contour extérieur, une rainure d'encliquetage (14) tournée vers l'extérieur dans laquelle s'engage un ressort d'encliquetage (34) de la calotte (3) en saillie du côté intérieur.

7. Fourchette de changement de vitesses selon l'une des revendications précédentes, la calotte (3) ayant la forme de base d'un cuboïde oblong et deux zones de logement (32, 32') étant ménagées, dans l'espace intérieur (30) de la calotte (3), à distance l'une de l'autre, pour recevoir chacune un corps magnétique (2 et 2').

8. Fourchette de changement de vitesses selon l'une des revendications précédentes, la calotte (3) étant une pièce d'un seul tenant en matière plastique moulée par injection avec des nervures intérieures de positionnement et de retenue (33) pour le ou les corps magnétiques (2, 2') et avec des nervures de renforcement intérieures (33').

9. Fourchette de changement de vitesses selon la revendication 8, la matière plastique dont se compose la calotte (3) étant un thermoplastique.

10. Fourchette de changement de vitesses selon la revendication 8 ou 9, la matière plastique dont se compose la calotte (3) étant une matière plastique résistante aux influences physiques et chimiques dans la transmission dans une plage de températures de -40 °C à + 150 °C.
